# EUROPÄISCHE PATENTSCHRIFT

(11) **EP 3 636 729 B1**
(45) Veröffentlichungstag und Bekanntmachung des Hinweises auf die Patenterteilung: **24.11.2021**
(21) Anmeldenummer: 19202487.5
(22) Anmeldetag: 10.10.2019
(51) Int. Cl.: C10G 1/02, C10B 55/02, C10B 57/02

(54) **VERFAHREN ZUR HERSTELLUNG VON COKER-KOHLE**
METHOD FOR THE PREPARATION OF COKER COAL
PROCÉDÉ DE FABRICATION DE CHARBON À COKE

(30) Priorität: 10.10.2018 EP 18199674
(43) Veröffentlichungstag der Anmeldung: 15.04.2020
(73) Patentinhaber: BDI Holding GmbH, 8074 Grambach (AT)
(72) Erfinder: PUCHER, Peter, 8042 Graz (AT); SCHWAIGER, Nikolaus, 8111 Judendorf-Straßengel (AT)
(74) Vertreter: Nemec, Harald

(56) Entgegenhaltungen:
- WO-A1-2010/031803
- WO-A1-2016/071208
- US-A1- 2012 325 641
- US-A1- 2015 152 334
- US-A1- 2016 200 579
- US-A1- 2017 137 715

## Beschreibung

Die vorliegende Erfindung betrifft ein Verfahren zur Herstellung von Coker-Kohle.

Aufgrund von staatlichen Vorgaben zur Senkung der CO₂-Emissionen werden auch Energiebereitsteller immer mehr dazu aufgefordert, ihre eigenen GHG-Emissionen bzw. jene ihrer Kunden nachhaltig zu senken.

Dabei sollte einerseits auf Energieeinsparung, andererseits aber auch auf den vermehrten Einsatz erneuerbare Energieträger wie Sonne, Wind oder nachwachsende Rohstoffe wie Biomasse Augenmerk gelegt werden. Im Bereich der Treibstoffe findet dieses Bestreben in der "RICHTLINIE DES EUROPÄISCHEN PARLAMENTS UND DES RATES
zur Förderung der Nutzung von Energie aus erneuerbaren Quellen" [1] seinen Niederschlag, welche vorsieht, einen Anteil von 3,5% der Treibstoffe bis zum Jahr 2030 als so genannten "2nd Generation Biofuel" bereit zu stellen.

Für deren Herstellung stehen aktuell aber nur wenige Technologien zur Verfügung, und so besteht ein steigender Bedarf an neuen Technologien zur Herstellung von Treibstoffen und flüssigen Energieträgern aus Biomasse. Eine Bürde ist dabei das Erfordernis der Entwicklung neuer Verfahren, Anlagen und Apparaten zur Umsetzung von Biomasse zu flüssigen und festen Energieträgern, die den gewohnten aktuellen Standards entsprechen oder diese übertreffen. Folgerichtig wäre es sinnvoll, bestehende Anlagen und Verarbeitungskonzepte so zu nutzen bzw. diese zu adaptieren, dass ein direkter Einsatz erneuerbarer Energieträger in bestehenden Anlagen zur Konversion von Energieträgern ― wie zum Beispiel Anlagen der erdölverarbeitenden Industrie ― möglich wird.

Strategien zur Substitution von fossilen Primärenergieträgern sind die Erzeugung von Biokraftstoffen erster und zweiter Generation.

Unter Biokraftstoffen erster Generation versteht man Treibstoffe, die durch Umsetzung von ölhaltigen Feldfrüchten gewonnen oder aus Stärke/Glucose haltigem Getreide fermentiert werden.

Die Biokraftstoffe der zweiten Generation zielen hingegen auf eine ganzheitliche Pflanzennutzung ab. Dabei wird besonderer Wert auf die Nutzung der nicht essbaren Bestandteile ― der so genannten Lignocellulose ― gelegt. Darunter findet sich z.B. die Bioethanolherstellung aus Lignocellulose die zwischen 10% [2] und 20% [3] des eingesetzten biogenen Kohlenstoffs in Bioethanol umwandeln kann. Ebenso gehören die indirekte- sowie die direkte Verflüssigung von Biomasse [4] zu den Herstellungsprozessen der Biotreibstoffe der zweiten Generation.

Die indirekte Verflüssigung von Biomasse ist, bezogen auf die Wahl der Einsatzstoffe, eine sehr flexible Technologie [5]. Beim ersten Prozessschritt wird aus der Biomasse ein Synthesegas erzeugt [6]. Mit dem Synthesegas, größten Teils CO und H2, wird durch die Fischer-Tropsch Synthese und anschließende Raffination Biotreibstoff erzeugt [7]. Die biogenen Produkte aus Synthesegas können, abhängig vom Syntheseweg, Alkane oder auch Methanol sein. Diese Produkte dienen als Plattform-Chemikalien.

Der große Nachteil dieser Technologie ist der enorme apparatebauliche Aufwand und die Komplexität des Verfahrens. Außerdem erfordert die Fischer-Tropsch Synthese eine sehr hohe Gasqualität und liefert ein äußerst uneinheitliches, wachsartiges Produkt, das aufwändig aufgearbeitet werden muss. Der hohe apparative Aufwand schlägt sich in einem sehr hohen Investment nieder.

Ein anderer Weg der Biokraftstofferzeugung ist die direkte Biomasseverflüssigung. Darunter versteht man die direkte Umwandlung lignocellulosehältiger "non-food" Biomasse zu hydrophilen Flüssigkeiten und anschließender Hydrodeoxygenierung (HDO) zu Biotreibstoffen.

Generell wird die direkte Biomasseverflüssigung in der Literatur in zwei große Teilschritte gegliedert [8―11]: Der erste Schritt ist die Pyrolyse der Biomasse und der zweite Schritt ist die Hydrodeoxygenierung des Pyrolyseöls zur Verringerung des Sauerstoffgehalts der in der Pyrolyse erzeugten Produkte. Die Ausbeute an flüssigen Produkten bei der Fast- oder Flash-Pyrolyse in einer zirkulierenden Wirbelschicht kann bis zu 80% der eingesetzten Biomasse betragen [12], aber die direkte Verwertung dieser Flüssigkeit ist aufgrund der komplexen Zusammensetzung [13] und des niedrigen pH-Werts [14] sehr schwierig. Der zweite Teilschritt ist die HDO des Pyrolyseöls [15]. Diese erfordert den Einsatz von Katalysatoren und Wasserstoff mit hohen Druck und ist aktuell kommerziell noch nicht umgesetzt. Die gebildete Pyrolysekohle wird üblicherweise direkt verbrannt und steht zur weiteren Nutzung nicht mehr zur Verfügung.

Ein Verfahren zur direkten Umsetzung von Biomasse zu flüssigen Energieträgern ist die so genannte Flüssigphasenpyrolyse. Dabei wird Biomasse (insbesondere Lignocellulose) unter dem Ausschluss von Sauerstoff einem flüssigen Wärmeträger mit einer Temperatur über 300°C zugeführt. Dabei wird feste Biomasse zu Gasen, kondensierbaren Dämpfen und einem festen Rückstand ― der so genannten Pyrolysekohle - umgesetzt. Ein solches Verfahren ist das sogenannte "bioCRACK-Verfahren", welches in der WO 2010/031803 A1 offenbart ist.

Die WO 2010/031803 A1 beschreibt ein Verfahren zur Flüssigphasenpyrolyse von kohlenwasserstoffhältiger Biomasse mit Schweröl als Wärmeträger, wobei eine kohlenwasserstoffhältige Biomasse eingesetzt werden soll, deren Feuchtigkeitsgehalt maximal 1,0 Gew.% bezogen auf die Biomasse beträgt. Gemäß der WO 2010/31803 A1 sowie auch der WO 2008/034596 A1 und der WO 2008/11925 A1 kann die Biomasse vor der Pyrolyse mit dem Wärmeträger (Schweröl) imprägniert werden. Als Wärmeträger wird dabei bevorzugt Vakuumgasöl eingesetzt. Damit eine Weiterverarbeitung dieses wertvollen Trägeröles in der Raffinerie erfolgen kann, muss folglich vorab die feste Pyrolysekohle abgetrennt und der darin enthaltene Rest an Trägeröl durch Extraktion und/oder thermisches Abdampfen abgetrennt werden. Das erfordert neben einem erhöhten technischen Aufwand zur Kühlung und anschließender mechanischen Abtrennung auch den Einsatz von HochTemperatur Wärme und/oder zusätzlichen chemischen Lösungsmitteln, um die verbleibende feste Pyrolysekohle nutzbar zu machen.

Die US 2012/0289752 A1 beschreibt ein Verfahren zur gemeinsamen Umsetzung einer festen Biomasse mit einem flüssigen Kohlenwasserstoff ― der unter anderem von einem Coker (Coker Gas Oil) stammen kann ― gemeinsam mit einem FCC Katalysator.

Die US 2011/0232146 A1 beschreibt ein Verfahren, bei dem Pyrolyseöl gemeinsam mit einem schweren Mineralöl einem Coker zugeführt wird. Die Pyrolyse erfolgt dabei vorab getrennt ohne den Einsatz des schweren Mineralöles.

Die US 2012/0325641A1 bzw. die WO 2012/178131 A beschreiben ein Verfahren zur Umsetzung einer festen Biomasse ― beschrieben als Wasserlinse ― und einem Kohlenwasserstoff in einem Coker. Die im Coker entstehende Coker-Kohle weist gemäß US 2012/0325641A1 einen Kohlenstoffanteil von 63,6 % und einen Sauerstoffanteil von 13,19 % auf. Für die Flüssigphase (flüssig oder kondensierbar anfallende Spaltprodukte), werden folgende Anteile angegeben: 84,67 % Kohlenstoff und 6,08 % Sauerstoff.

Die US 8,288,600 B2 beschreibt ein Verfahren, bei dem trockene torrefizierte Biomasse zerkleinert und gemeinsam mit einem Kohlenwasserstoff in einen Reaktor eingebracht wird. Die vorliegende Erfindung stellt sich zur Aufgabe, eine weitere Verbesserung bei der Herstellung von Biotreibstoffen der zweiten Generation aus Biomasse zur Verfügung zu stellen.

Diese Aufgabe wird gelöst durch ein Verfahren zur Herstellung von Coker-Kohle, umfassend die Schritte
- gemeinsame Vorbehandlung einer Mischung einer Biomasse und eines Schweröls mittels einer Flüssigphasenpyrolyse, wobei Brüden sowie ein Bodenprodukt entstehen
   - Abtrennen der Brüden vom Bodenprodukt und
      - Verkokung des Bodenprodukts,
wobei das Schweröl (HC1) eine kinematische Viskosität bei 100 °C von mehr als 10 mm²/s, bevorzugt von mehr als 15 mm²/s hat.

### KURZE BESCHREIBUNG DER FIGUREN

Die Figuren 1 und 2 zeigen schematisch den Ablauf zweier bevorzugter Ausführungsformen des erfindungsgemäßen Verfahrens.

Figur 3 zeigt die Verteilung des biogenen Kohlenstoffs in den Produkten der Pyrolyse aus Beispiel 1.

### DETAILLIERTE BESCHREIBUNG DER ERFINDUNG

Beispielhaft für den Stand der Technik beschreibt WO 2010/031803 A1 das "bioCRACK-Verfahren". Hierbei wird Biomasse mittels Flüssigphasenpyrolyse und unter Ausschluss von Sauerstoff einem flüssigen Wärmeträger (Trägeröl, insbesondere Vakuumgasöl) zugeführt und mit einer Temperatur über 300°C umgesetzt. Dabei entstehen aus der festen Biomasse Gase, kondensierbare Dämpfe und ein fester Rückstand (Pyrolysekohle). Die
WO 2010/031803 A1 beschreibt konkret die Verwendung von Vakuumgasöl als Trägeröl, welches sich durch eine geringe kinematische Viskosität auszeichnet und an sich ein vergleichsweise hochwertiges Zwischenprodukt darstellt. Daher folgt im Anschluss an die Flüssigphasenpyrolyse eine mechanische Separation des Bodenproduktes in die flüssigen Produkte (verbleibendes Trägeröl) sowie die Pyrolysekohle. Aufgrund der hohen Kosten des Vakuumgasöles ist die mechanische Separation des Bodenproduktes notwendig, um das Verfahren wirtschaftlich zu betreiben. Im Anschluss an die mechanische Separation kann das Vakuumgasöl weiterverarbeitet oder ggf. im Verfahren der Flüssigphasenpyrolyse rezykliert werden. Die bei der mechanischen Separation, welche u.a. eine Abkühlung des Bodenproduktes auf eine Temperatur unter den Flammpunkt des Trägeröls umfasst, entstehende Pyrolysekohle ist fest, weist jedoch aufgrund ihrer hohen Porosität noch immer einen Trägerölanteil (Vakuumgasöl) von etwa 50% auf. Die WO 2010/031803 A1 führt als einzige Verwertung dieser Pyrolysekohle (inkl. 50 % wertvollem Vakuumgasöl) die thermische Verwertung an. Eine direkte Zufuhr der festen Pyrolysekohle im Anschluss an die mechanische Separation eines Bodenproduktes enthaltend Vakuumgasöl, wie beispielsweise in WO 2010/031803 A1 beschrieben, in einen Coker, wäre technisch nicht möglich.

Im gegenständlichen erfindungsgemäßen Verfahren wird anstelle des Vakuumgasöls als Trägeröl ein Schweröl mit einer höheren kinematischen Viskosität (kinematischen Viskosität bei 100 °C von mehr als 10 mm²/s, bevorzugt von mehr als 15 mm²/s) als Vakuumgasöl eingesetzt. Dieses erfindungsgemäß eingesetzte Schweröl ist günstiger als Vakuumgasöl. Eine mechanische Separation des Bodenproduktes, wie in WO 2010/031803 A1 beschrieben, wäre jedoch aufgrund der höheren kinematischen Viskosität des als Trägeröl eingesetzten Schweröls im Vergleich zu Vakuumgasöls technisch nicht möglich. Somit verbliebe dem Fachmann nur eine thermische Verwertung des angefallenen Bodenprodukts, welche wirtschaftlich nicht sinnvoll ist. Es wurde nun aber erkannt, dass das im erfindungsgemäßen Verfahren entstehende Bodenprodukt aber im Gegensatz zur festen Pyrolysekohle, welche im Anschluss an die mechanische Separation nach WO 2010/031803 A1 erhalten wird, einen flüssigen Prozessstrom darstellt. Dieser kann daher mit konventioneller Technik transportiert, erhitzt und gekühlt werden und wird ― gegebenenfalls nach einer Konditionierung wie einer Temperierung, Zerkleinerung größerer Partikel sowie einer eventuellen Beimengung von üblichen Additiven oder weiteren üblichen Stoffströmen aus der Erdölverarbeitung nach dem Stand der Technik ― einem Ofen und in Folge dem zweiten Prozessschritt Coker zugeführt.

Damit stellt das erfindungsgemäße Verfahren ausgehend eine elegante Möglichkeit zur Verfügung, unter Verwendung eines günstigeren Trägeröls eine noch vollständigere Verwertung aller Eingangsstoffe (Trägeröl und Biomasse) bis hin zu einer hochwertigen Cokerkohle zu erzielen.

Weiters kann sich das erfindungsgemäß eingesetzte Schweröl durch eine höhere Dichte (mehr als 930 kg/m³, bevorzugt mehr als 940 kg/m³ bei 15 °C) und/oder einen geringeren API-Grad (weniger als 21 °API, bevorzugt weniger als 19 °API) als Vakuumgasöl auszeichnen. Der API-Grad beschreibt eine relative Dichte (bezogen auf Wasser) bei 60 °F.

Die Erfindung basiert daher auf der Idee der Einbringung von fester Biomasse, welche naturgemäß mit der Einbringung von einer großen Menge an Sauerstoff verbunden ist, in einen Standard Coker der Mineralölverarbeitung durch eine gemeinsame Vorbehandlung von Biomasse und einem schwersiedenden/hochviskosen Intermediat der Mineralölverarbeitung (bevorzugt Rückstandsöl = üblicher Coker-Feedstrom) als Schweröl über den Schritt der Flüssigphasenpyrolyse. Durch die neuartige zweistufige Verarbeitung werden die unter den Bedingungen der Pyrolyse entstehenden Brüden, welche gasförmige, Sauerstoff-reiche Pyrolyseprodukte wie Pyrolysegas, hydrophiles Pyrolyseöl und hydrophobe Crack-Produkte enthalten, bereits im Schritt der Flüssigphasenpyrolyse abgezogen, und nur das Bodenprodukt (Sauerstoff-reduzierte Pyrolysekohle mit bestimmbaren biogenen Anteil an Kohlenstoff sowie verbliebenes Schweröl, bevorzugt Rückstandsöl) in den Coker eingebracht. Die dabei entstehende Coker-Kohle (Petrolkoks) beinhaltet folglich biogene Bestandteile der Pyrolysekohle und kann über den üblichen Weg gewonnen werden.

Die bei der Flüssigphasenpyrolyse durch Cracken von Biomasse und dem Schweröl entstehenden Brüden werden gesammelt und weiterverarbeitet. Insbesondere werden die Brüden abgezogen und kondensiert. Die nicht kondensierbaren Bestandteile werden als Gas getrennt gesammelt. Alle Reaktionsprodukte enthalten dabei bereits einen bestimmbaren Anteil an biogenem Kohlenstoff ("Biobased Carbon Content" nach ASTM D6866) aus der Biomasse und beinhalten somit automatisch einen Anteil an erneuerbarer Energie.

Das nach Abtrennung der gasförmigen Pyrolyseprodukte verbleibende Bodenprodukt, also flüssige Produkte (verbleibendes Schweröl) sowie die entstehende Pyrolysekohle werden ― gegebenenfalls nach einer Konditionierung wie einer Temperierung, Zerkleinerung größerer Partikel sowie einer eventuellen Beimengung von üblichen Additiven oder weiteren üblichen Stoffströmen aus der Erdölverarbeitung nach Stand der Technik ― einem Ofen und in Folge dem zweiten Prozessschritt Coker zugeführt.

Im erfindungsgemäßen Verfahren wird als Schweröl bevorzugt Rückstandsöl aus Destillations- oder Crackanlagen der Erdölverarbeitung wie:
- Coker-Feed
- Atmosphärischer Rückstand
- Visbraker Rückstand
- Vakuum Rückstand
- FCC Rückstand
- Schweres Gasöl
und Mischungen daraus eingesetzt.

Dem Schweröl bzw. der Mischung aus Schweröl und Biomasse können zur Verdünnung auch leichter flüchtige Flüssigkeiten, insbesondere leichter flüchtige Fraktionen der Erdölverarbeitung zugesetzt werden.

Als Biomasse kann bevorzugt ein Material ausgewählt aus der Gruppe bestehend aus lignocellulosischem Material wie Holz, Stroh, Pflanzenbestandteilen, biologischen Rückständen, wie z.B. Agrarrückständen, nichtlignocellulosischen Materialien wie z.B. Algen, und Mischungen daraus eingesetzt werden.

Im Schritt der Flüssigphasenpyrolyse liegt bevorzugt der Anteil an Biomasse in der Mischung mit dem Schweröl bei 20 Gew.% oder darunter.

Die Flüssigphasenpyrolyse kann bei Temperaturen im Bereich von 350°C bis 450°C, bevorzugt 400°C bis 450 °C und einem Überdruck von 0,5 bar oder weniger durchgeführt werden.

Der Einsatz von hochviskosem Schweröl als Trägeröl im erfindungsgemäßen Verfahren ermöglicht die Flüssigphasenpyrolyse insbesondere bei höheren Temperaturen im Bereich von 400°C bis 450 °C, wodurch eine höhere Ausbeute bei der Flüssigphasenpyrolyse erzielt werden kann. Im Gegensatz dazu kann unter Verwendung von Vakuumgasöl als Trägergasöl die Flüssigphasenpyrolyse lediglich bis zu einer Temperatur von 380°C durchgeführt werden.

Insbesondere kann die Flüssigphasenpyrolyse ohne Anwesenheit eines Katalysators durchgeführt werden.

Zu weiteren Details des Schritts der Flüssigphasenpyrolyse kann auf die Offenbarung der WO 2010/031803 A1 sowie der WO 2016/071208 verwiesen werden.

Jene Anteile der Biomasse, die nach dem Pyrolyseschritt in Form von fester Pyrolysekohle oder als gelöste hochmolekulare Kohlenwasserstoffen in den Coker eingebracht werden, werden im Zuge der Temperaturerhöhung und Verweilzeit im Coker weiter gespalten. Dadurch wird eine weitere Auftrennung in festen Rückstand, kondensierbare Dämpfe und bei Raumtemperatur nicht kondensierbare Gase durchgeführt. Alle Produktfraktionen beinhalten dabei Anteile von biogenem Kohlenstoff und haben somit einen variablen Anteil erneuerbarer Energie gespeichert.

Bei der Verkokung anfallende kondensierbare Dämpfe und bei Raumtemperatur nicht kondensierbare Gase werden bevorzugt gesammelt und weiterverarbeitet.

Die im Coker verbleibende Kohle wird, in für Coker typischer Weise, ausgebracht und getrocknet. Auch sie zeichnet sich durch einen messbaren Anteil an biogenen Kohlenstoff aus und besitzt dadurch einen bestimmbaren Anteil an nachhaltig erzeugter Energie aus Biomasse. Die Nutzung dieser Kohle, mit biogenen Anteilen (typisch etwa 10 ― 30% nach ASTM D6866), kann in gewohnter Weise wie ihr rein fossiles Pendant erfolgen, oder aber die für Pyrolysekohle typischen Verwertungswege gehen.

Dementsprechend betrifft die vorliegende Erfindung auch eine Coker-Kohle, die durch einen Anteil an biogenem Kohlenstoff von 5% bis 30% nach ASTM D6866 und einen Anteil an Sauerstoff von weniger als 10%, bevorzugt weniger als 5% gekennzeichnet ist.

Die erfindungsgemäße Coker-Kohle kann durch das erfindungsgemäße Verfahren erhältlich sein.

Der geringe Anteil an Sauerstoff in der erfindungsgemäßen Coker-Kohle kann durch das erfindungsgemäße zweistufige Verfahren erzielt werden, weil sauerstoffreiche Fraktionen bereits im ersten Verfahrensschritt der Flüssigphasenpyrolyse abgetrennt werden können.

Die erfindungsgemäße Coker-Kohle weist bevorzugt einen Anteil an gesamtem Kohlenstoff von mehr als 85%, bevorzugt mehr als 90% auf.

Im Coker entstehen zusätzlich zur Coker-Kohle auch Spaltprodukte. Diese Spaltprodukte können durch einen Kondensator getrennt werden, wobei kondensierbare Spaltprodukte entstehen können, welche der Fachmann im Zusammenhang der Erfindung als "Coker-Crackprodukte" versteht. Die Coker-Crackprodukte können durch einen Separator in eine leichtflüchtige Fraktion LF, eine schwerflüchtige Fraktion HF sowie ggf. eine Wasserfraktion WF2 getrennt werden. Die kondensierbaren Spaltprodukte LF+HF+WF2, im Folgenden mit Spaltprodukte "OF2" bzw. mit "Coker-Crackprodukte" zusammengefasst, und die verbleibende Coker-Kohle CH können getrennt gesammelt werden.

Daher betrifft die vorliegende Erfindung auch Coker-Crackprodukte, die durch einen Anteil an biogenem Kohlenstoff von 2% - 10% nach ASTM D6866 und einen Anteil an Sauerstoff von weniger als 5%, bevorzugt weniger als 3% gekennzeichnet sind.

Die erfindungsgemäßen Coker-Crackprodukte können durch das erfindungsgemäße Verfahren erhältlich sein.

Der geringe Anteil an Sauerstoff in den erfindungsgemäßen Coker-Crackprodukten kann, analog zu der Beschreibung des geringen Sauerstoffanteils der erfindungsgemäßen Coker-Kohle, durch das erfindungsgemäße zweistufige Verfahren erzielt werden.

Die erfindungsgemäßen Coker-Crackprodukte weisen bevorzugt einen Anteil an gesamtem Kohlenstoff von mehr als 80%, bevorzugt mehr als 85% auf.

### Detaillierte Beschreibung der Figuren

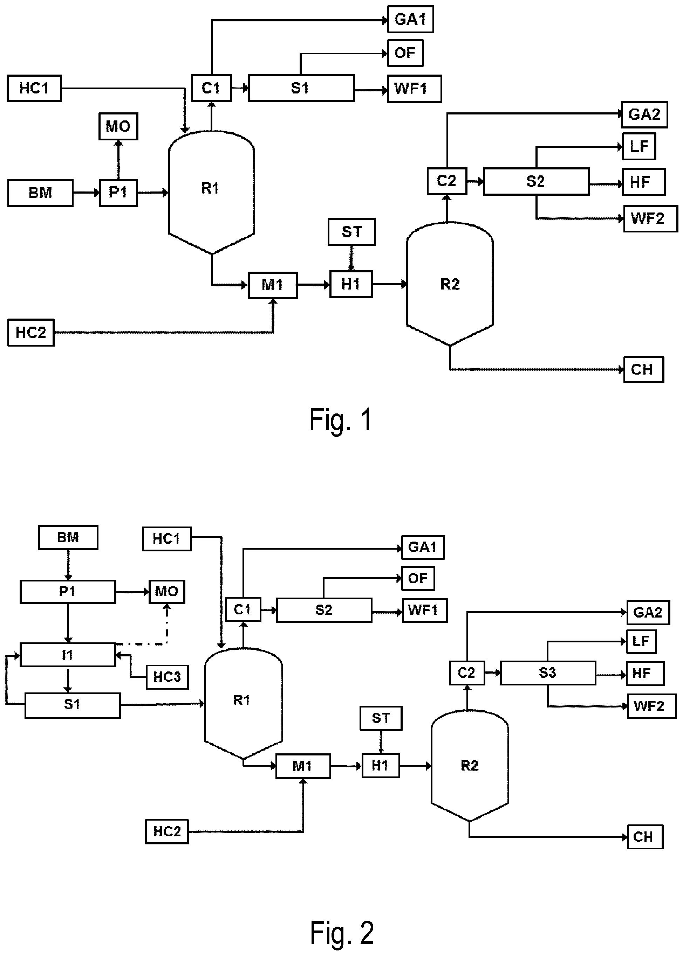

Wie in Figur 1 dargestellt, umfasst das erfindungsgemäße Verfahren eine mechanische und/oder thermische Vorbehandlung P1 einer gegebenenfalls feuchten Biomasse BM, welche vorzugsweise als Lignocellulose vorliegt. Beispielsweise kann in der Vorbehandlung P1 das Material zerkleinert und/oder vorhandene Feuchtigkeit MO abgetrennt werden. Die konditionierte Biomasse BM wird kontinuierlich einem Reaktor R1 zugeführt. Ebenfalls dem Reaktor R1 zugeführt wird ein heißes Schweröl wie beispielsweise ein Mineralöl HC1, welches ein Rückstandsöl, wie es üblicherweise einem Coker der Mineralölverarbeitung zugeführt wird, ist. Im Reaktor R1 wird bei Temperaturen im Bereich von typischerweise 350°C bis 450°C und geringem Überdruck (z.B. 0,5bar bei 410°C) eine Pyrolyse ohne Zugabe eines Katalysators durchgeführt. Die Brüden aus Reaktor R1 gelangen in einen Kondensator Cl. Gasförmige Bestandteile werden als Gas GA1 gesammelt. Die kondensierten Bestandteile gelangen in einen Separator S1 und werden dort in eine ölige, hydrophobe Kohlenwasserstoff-Fraktionen OF sowie eine hydrophile wässerige Fraktionen WF1 (= Pyrolyse-Öl) separiert. Die Spaltprodukte stammen dabei sowohl aus dem Schweröl, bevorzugt Rückstandsöl, als auch aus der Biomasse BM beziehungsweise Lignocellulose und beinhalten bestimmbare Anteile an biogenen Kohlenstoff aus der Lignocellulose.

Das Bodenprodukt des Reaktors R1 wird in einer Konditionierung M1 temperiert, ggf. werden Pyrolysekohle Partikel zerkleinert und weitere Öle/Kohlenwasserstoffe HC2, z.B. ebenfalls Schweröle, bevorzugt Rückstandsöle der Mineralölverarbeitung sowie Additive beigemengt, um typische Bedingungen für einen Coker nach Stand der Technik einzustellen. Das Gemisch kommt weiter in einen Ofen H1 und es wird - abhängig von Fahrweise und Typ des Cokes ― Wasserdampf ST zugefügt. Im Coker R2 herrschen typische Bedingungen gemäß dem Stand der Technik. Die dabei entstehenden Spaltprodukte werden als Brüden in einen Kondensator C2 abgezogen. Die nicht kondensierbaren gasförmigen Bestandteile werden als Gas GA2 gesammelt. Die kondensierten Bestandteile gelangen in einen Separator S2 und werden dort in eine leichtflüchtige Fraktion LF, eine schwerflüchtige Fraktion HF sowie ggf. eine Wasserfraktion WF2 getrennt. Je nach Erfordernissen und Möglichkeiten können Teile dieser Fraktionen in den Coker-Prozess rezykliert werden. Die entstehende Coker-Kohle CH, auch als Petrolkoks bezeichnet, wird ― abhängig vom Coker-Typ und Fahrweise ― nach üblichen Methoden gemäß dem Stand der Technik ausgebracht und weiterverarbeitet. Auch die im Coker R2 anfallenden Produkte zeichnen sich durch einen bestimmbaren Anteil an biogenem Kohlenstoff aus der Biomasse BM beziehungsweise Lignocellulose aus.

Figur 2 zeigt eine weitere Ausführungsform des erfindungsgemäßen Verfahrens. In Figur 2 wird eine gegebenenfalls feuchte Biomasse BM, vorzugsweise Lignocellulose, einem mechanischen und/oder thermischen Vorbehandlungsschritt P1 unterzogen. Beispielsweise kann sie dabei zerkleinert und/oder vorhandene Feuchtigkeit MO abgetrennt werden. In der in Figur 2 gezeigten Ausführungsform ist anschließend eine Imprägnierung I1 der vorbehandelten Biomasse BM mit einem Mineralöl/Kohlenwasserstoff HC3 vorgesehen. Eine besondere Ausführungsform eines derartigen Verfahrens, bei welchem die Imprägnierung mit einer leichtflüchtigen nicht-wässerigen Flüssigkeit erfolgt, ist beispielsweise in der WO 2016/071208 A1 offenbart. Auch in diesem Schritt kann durch die Imprägnierung I1 Feuchtigkeit MO aus der Biomasse abgetrennt werden. In einem ersten Separator S1 wird überschüssige Flüssigkeit aus der Biomasse abgetrennt und wieder zum Imprägnierungsschritt I1 zurückgeführt.

Die imprägnierte Biomasse BM bzw. Lignocellulose wird einem Reaktor R1 zugeführt. Ebenfalls dem Reaktor R1 zugeführt wird ein heißes Schweröl HC1, bevorzugt ein Rückstandsöl, wie es üblicherweise einem Coker der Mineralölverarbeitung zugeführt wird. Im Reaktor R1 wird bei Temperaturen im Bereich von typischerweise 350°C bis 450°C und geringem Überdruck (z.B. 0,5bar bei 410°C) eine Pyrolyse ohne Zugabe eines Katalysators durchgeführt. Die Brüden aus Reaktor R1 gelangen in einen Kondensator Cl. Gasförmige Bestandteile werden als Gas GA1 gesammelt. Die kondensierten Bestandteile gelangen in einen Separator S2 und werden dort in eine ölige, hydrophobe Kohlenwasserstoff-Fraktionen OF sowie eine hydrophile wässerige Fraktion WF1 (in der Regel Pyrolyse-Öl) separiert. Die Spaltprodukte stammen dabei sowohl aus dem Schweröl, bevorzugt Rückstandsöl/Imprägnier-Öl, als auch aus der Biomasse BM, bzw. Lignocellulose und beinhalten bestimmbare Anteile an biogenen Kohlenstoff aus der Biomasse BM, bzw. Lignocellulose.

Das Bodenprodukt des Reaktors R1 wird in der Konditionierung M1 temperiert, Pyrolysekohle Partikel werden ggf. zerkleinert und ggf. weitere Schweröle, bevorzugt Rückstandsöle HC2 der Mineralölverarbeitung sowie Additive beigemengt, um typische Bedingungen für einen Coker gemäß dem Stand der Technik einzustellen.

Die Ströme des Schweröls, bevorzugt Rückstandsöls HC1, der Mineralöle/Kohlenwasserstoffe HC2 und HC3 können jeweils miteinander oder mit Teilströmen daraus ident sein oder aber jeweils eine eigenständige Fraktion aus dem Raffinierbetrieb sein.

Das Gemisch kommt weiter in einen Ofen H1 und es wird - abhängig von Fahrweise und Typ des Cokers ― Wasserdampf ST zugefügt. Im Coker R2 herrschen typische Bedingungen gemäß dem Stand der Technik. Die dabei entstehenden Spaltprodukte werden als Brüden in einen Kondensator C2 abgezogen. Die nicht kondensierbaren gasförmigen Bestandteile werden als Gas GA2 gesammelt. Die kondensierten Bestandteile gelangen in einen Separator S3 und werden dort in eine leichtflüchtige Fraktion LF, eine schwerflüchtige Fraktion HF sowie ggf. eine Wasserfraktion WF2 getrennt. Je nach Erfordernissen und Möglichkeiten können Teile dieser Fraktionen in den Coker-Prozess rezykliert werden. Die entstehende Coker-Kohle CH, auch als Petrolkoks bezeichnet, wird ― abhängig vom Coker-Typ und Fahrweise ― nach üblichen Methoden gemäß dem Stand der Technik ausgebracht und weiterverarbeitet. Auch die Produkte aus Coker R2 zeichnen sich durch einen bestimmbaren Anteil an biogenem Kohlenstoff aus der Biomasse BM, bzw. Lignocellulose aus.

### Beispiel 1:

Es wurde ein Laborversuch unter Verwendung von Fichtenholz in der Form von Fichtenholzpellets BM1 als Biomasse BM und Mineralöl HC1 ― ein typischer VakuumRückstand, beziehungsweise ein Rückstandsöl für die Weiterverarbeitung in einem Coker - als Trägermedium bei 410°C Reaktionstemperatur und etwa 0,05 bar Überdruck durchgeführt. Als Reaktoreinheit wurde ein von außen beheizter Rührkessel im Labormaßstab mit anschließender Kondensatoreinheit eingesetzt.

Es wurden ca. 100g gemahlene Fichtenholz Pellets BM1 vorgetrocknet und ohne vorherige Imprägnierung dem Laborreaktor gefüllt mit etwa 600g Mineralöl HC 1 schrittweise zugeführt. Die entstehenden flüssigen und festen Produkte wurden nach Abschluss separiert und gewogen. Die entstandenen nicht kondensierbaren Gase GA1 wurden aus einer Massendifferenz zur eingesetzten Stoffmasse ermittelt. Als Kondensat entstanden als flüssige Pyrolyseprodukte wassermischbares Pyrolyseöl mit Reaktionswasser, beziehungsweise wässriger Fraktion WF1, sowie eine kohlenwasserstoff-lösliche flüssige Produktfraktion OF1. Die verbleibende feste Pyrolyse-Kohle wurde, dispergiert in dem verbleibenden Mineralöl HC1, als gemeinsame Fraktion ausgewogen und im Anschluss mit einem Ultra-Turrax bei etwa 100°C unter 2mm zerkleinert und so für weiterführende Analysen in der Konditionierung M1 aufbereitet. Von allen flüssigen Produkten wurden Analysen zur Bestimmung den biogenen Kohlenstoff Anteils (C-14) nach ASTM D6866 durchgeführt. Demnach wurden aus rund 600g Mineralöl HC1, beziehungsweise Vakuumrückstand, etwa 160g (27%) kohlenwasserstoff-lösliche flüssige Produktfraktion OF1 mit etwa 7% biogenen Kohlenstoff Anteil gewonnen. Das verbleibende Mineralöl HC1 mit der darin dispergierten Pyrolysekohle aus der Konditionierung M1 weist einen biogenen Kohlenstoff Anteil von etwa 5,6% auf, wie in der folgenden Tabelle 1 dargestellt:

**Tabelle 1**

| Bezeichnung | | Masse [g] | Gehalt biogener Kohlenstoff C-14 [%] |
|---|---|---|---|
| trockene Biomasse | BM1 | 98,75 | 100 |
| Mineralöl (Vakuum Rückstand) | HC1 | 603,10 | 0 |
| Gas (als Differenz) | GA1 | -35,19 | n.b. |
| wässriges Pyrolyseöl | WF1 | -36,25 | 100 |
| kohlenwasserstoff-lösliche flüssige Produktfraktion Rückstand und | OF1 | -160,10 | 7,0 |
| Pyrolysekohle aus der Konditionierung | M1 | -470,31 | 5,6 |

### Beispiel 2:

Etwa 11g einer Mischung aus dem Mineralöl HC1 der Flüssigphasenpyrolyse bei 410°C; 0,05 bar und der darin fein dispergierten Pyrolysekohle aus der Konditionierung M1 wie aus Beispiel 1 werden einem Labor-Coker Versuch bei etwa 3bar Überdruck, Stickstoff-Inertisierung und etwa 500°C unterzogen. Die kondensierbaren Spaltprodukte OF2 (LF+HF+WF2), d.h. die Coker-Crackprodukte, und die verbleibende Coker-Kohle CH werden getrennt gesammelt und ausgewogen und der Gehalt an biogenen Kohlenstoff nach ASTM D6866 bestimmt. Tabelle 2 fasst die Ergebnisse zusammen.

Demnach entstehen etwa 52% kondensierbare ölige Spaltprodukte OF2, 16% nicht kondensierbare Gase GA2 und etwa 32% Coker-Kohle CH. Die Spaltprodukte OF2 weisen dabei einen biogenen Kohlenstoffanteil C-14 nach ASTM D6866 von rund 3% und der Coker-Kohle CH von etwa 15% auf.

**Tabelle 2**

| Bezeichnung | | Masse [g] | Gehalt biogener Kohlenstoff C-14 [%] |
|---|---|---|---|
| Rückstand und Pyrolysekohle aus der Konditionierung | M1 | 11,29 | 5,44 |
| Gas (als Differenz) | GA2 | -1,84 | n.b. |
| Spaltprodukte | OF2 | -5,84 | 3,30 |
| Coker-Kohle | CH | -3,61 | 14,53 |

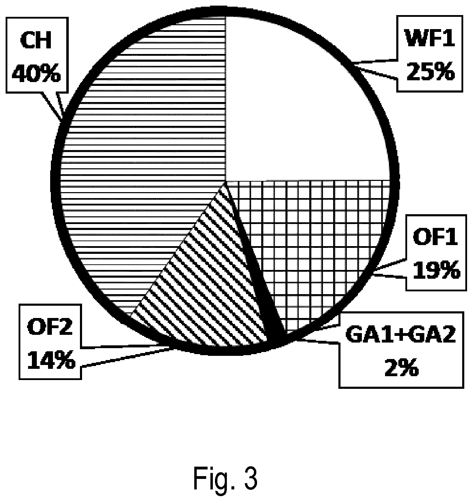

Figur 3 zeigt eine berechnete Verteilung des biogenen Kohlenstoffs auf Basis der Ergebnisse aus Beispiel 1 und Beispiel 2. Demnach verbleiben etwa 40% des biogenen Kohlenstoffs der eingesetzten Biomasse BM1 in der Coker-Kohle CH, 25% gehen in das Pyrolyseöl WF1, 19% bzw. 14% gehen in die öligen Spaltprodukte OF1 und OF2 sowie rund 2% verbleiben als Differenz auf 100% für die Gasfraktionen GA1 und GA2.

### Beispiel 3:

Es wurden weitere Eigenschaften (der Gehalt an Sauerstoff+Schwefel+Asche (O+S+Asche) und der Gehalt an gesamten Kohlenstoff) der Coker-Kohle und der Spaltprodukte (d.h. Coker-Crackprodukte) aus Beispiel 2 bestimmt. Die Ergebnisse sind in Tabelle 3 zusammengefasst.

**Tabelle 3**

| Bezeichnung | | Gehalt O+S+Asche [%] | Gehalt gesamter Kohlenstoff [%] |
|---|---|---|---|
| Spaltprodukte | OF2 | 2,9 | 86,6 |
| Coker-Kohle | CH | 1,2 | 91,3 |

Tabelle 4 zeigt den Gehalt an Sauerstoff (O) und Kohlenstoff im Stand der Technik (US 2012/0325641 A1). Hierbei ist die "Flüssigphase" das Pendant zu den kondensierbaren Spaltprodukten OF2, d.h. zu den erfindungsgemäßen Coker-Crackprodukten.

**Tabelle 4**

| Bezeichnung | | Gehalt O [%] | Gehalt Kohlenstoff [%] |
|---|---|---|---|
| Flüssigphase | - | 6,08 | 84,67 |
| Coker-Kohle | - | 13,19 | 63,6 |

Es ist ersichtlich, dass der Gehalt der O+S+Asche Fraktion im erfindungsgemäßen Spaltprodukt und insbesondere in der erfindungsgemäßen Coker-Kohle deutlich unter jenem Sauerstoff Gehalt, welcher im Stand der Technik beschrieben wurde, liegen. Dies ist auf das zweistufige erfindungsgemäße Verfahren zurückzuführen, worin sauerstoffreiche Fraktionen bereits vor dem Eintritt in den Coker (zweite Stufe des Verfahrens) währen der ersten Verfahrensstufe (Flüssigphasenpyrolyse) entfernt wurden.

Weiters weisen die erfindungsgemäßen Produkte einen höheren Anteil an gesamt Kohlenstoff auf, als jene im Stand der Technik (US 2012/0325641 A1) beschriebenen.

Das erfindungsgemäße Verfahren erfüllt die steigende Nachfrage an Prozessen zur Herstellung von Biotreibstoffen der zweiten Generation aus nicht essbaren Rohstoffen wie Lignocellulose.

Durch den Einsatz von Schweröl (HC1) und der Flüssigphasenpyrolyse ergeben sich flüssige Prozessströme, die mit konventioneller Technik transportiert, erhitzt und gekühlt werden können. Dadurch wird der technische Aufwand reduziert und die Investitionskosten gesenkt.

Der Prozess kann in bestehende Raffineriekonzepte integriert werden und kann somit bestehende Infrastruktur den erneuerbaren Rohstoffe Lignocellulose in Prozesse zur Mineralölverarbeitung in sinnvoller und wirtschaftlichen weise einbringen. Die daraus entstehenden Produkte beinhalten aufgrund ihres Anteils an biogenem Kohlenstoff automatisch einen bestimmbaren Anteil an erneuerbarer Energie und können in gewohnter Weise mit Methoden gemäß dem Stand der Technik weiter genutzt werden (Co-Processing).

Durch eine Auftrennung der Prozessführung in einen ersten Schritt, der Flüssigphasenpyrolyse, und eine nachfolgende Weiterverarbeitung mit der Coker-Technologie können die jeweiligen Prozessbedingungen und die technische Umsetzung an die Anforderungen für eine optimale Umwandlung angepasst werden. Die Betriebssicherheit der Gesamtanlage wird erhöht, die eingebrachte Fracht an Sauerstoff bzw. niedersiedende Kohlenwasserstoffe in den Coker reduziert und die Umsetzung von fester Lignocellulose in flüssige und gasförmige Produkte erhöht.

Durch den Einsatz von Schweröl, bevorzugt Rückstandsöl, mit einer kinematischen Viskosität bei 100 °C von mehr als 10 mm²/s, bevorzugt von mehr als 15 mm²/s, als Trägeröl kann die Verarbeitungstemperatur gegenüber konventioneller Flüssigphasenpyrolyse erhöht, und somit der Umsetzungsgrad der Lignocellulose zu flüssigen und gasförmigen Produkten gesteigert werden. Die kombinierte Umsetzung von fossilem Trägeröl und Lignocellulose erhöht die Ausbeute an leichteren Spaltprodukten aus den fossilen Kohlenwasserstofffraktionen. So wird zu einer verbesserten Ausbeute und Wirtschaftlichkeit bei der Verarbeitung schweren Rückstände in der Erdölraffination beigetragen.

Die entstehende Pyrolysekohle muss aufgrund des Einsatzes von Schweröl, bevorzugt Rückstandsöl nicht gesondert abgetrennt werden, im Gegensatz zu im Stand der Technik bekannten Verfahren unter Verwendung von Vakuumgasöl. Die durch das erfindungsgemäße Verfahren hergestellte Pyrolysekohle kann direkt in einen Coker eingebracht werden und letztlich als Coker-Kohle durch konventionellen Betrieb und Entleerung des Cokers in üblicher Weise nach Stand der Technik gewonnen werden. Im Gegensatz zur üblichen Flash-Pyrolyse Verfahren wird Pyrolyse-Kohle also nicht intern verbraucht und steht im Anschluss noch für eine weitere Verwertung zur Verfügung.

Aufgrund des Einsatzes von Biomasse beinhaltet die Coker-Kohle auch biogenen, CO₂-neutralen Kohlenstoff und verfügt so über verringerte GHG-Emissionen je Energieeinheit im Vergleich zu ihrem rein fossilen Pendant.

### Nicht- Patentliteratur:

[1] European Commission, 2016, 382.
[2] R. Rinaldi, F. Schüth, Energy Environ. Sci. 2009, 2 (6), 610. DOI: 10.1039/b902668a.
[3] J. Larsen, in 3 Int. Conf. Lignocellul. Ethanol 2013**.**
[4] F. Behrendt, Y. Neubauer, Chem. Eng. Technol. 2008, 31 (5). DOI: 10. 1002/ceat.200800077.
[5] R. Rauch, Status of R&D of Synthetic Biofuels in Güssing, Berlin 2010**.**
[6] H. J. Arpe, Industrielle Organische Chemie, 6., vollst ed., Wiley-VCH, Weinheim 2007**.**
[7] D. Leckel, Energy & Fuels. 2009, 23 (5), 2342-2358. DOI: 10.1021/ef900064c.
[8] P. M. Mortensen, J.-D. Grunwaldt, P. a. Jensen, K. G. Knudsen, a. D. Jensen, Appl. Catal. A Gen. 2011, 407 (1―2), 1―19. DOI: 10.1016/j.apcata.2011.08.046.
[9] a. R. Ardiyanti, a. Gutierrez, M. L. Honkela, a. O. I. Krause, H. J. Heeres, Appl. Catal. A Gen. 2011, 407 (1―2), 56―66. DOI: 10.1016/j.apcata.2011.08.024.
[10] F. de Miguel Mercader, M. J. Groeneveld, S. R. a. Kersten, N. W. J. Way, C. J. Schaverien, J. a. Hogendoorn, Appl. Catal. B Environ. 2010, 96 (1―2), 57―66. DOI: 10.1016/j.apcatb.2010.01.033.
[11] F. D. M. Mercader, P. Koehorst, AIChE J. 2011, 57(11), 3160―3170. DOI: 10. 1002/aic. 12503.
[12] A. V. Bridgwater, D. Meier, D. Radlein, Org. Geochem. 1999, 30 (12), 1479―1493. DOI: 10.1016/S0146-6380(99)00120-5.
[13] N. Schwaiger, R. Feiner, K. Zahel, A. Pieber, V. Witek, P. Pucher, E. Ahn, P. Wilhelm, B. Chernev, H. Schröttner, et al., BioEnergy Res. 2011, 4 (4), 294―302. DOI: 10.1007/s12155-011-9132-8.
[14] D. Meier, O. Faix, Bioresour. Technol. 1999, 68, 71―77. DOI: 10.1016/S0960-8524(98)00086-8.
[15] N. Schwaiger, D. C. Elliott, J. Ritzberger, H. Wang, P. Pucher, M. Siebenhofer, Green Chem. 2015, 17 (4), 2487―2494. DOI: 10.1039/C4GC02344G

## Patentansprüche

1. Verfahren zur Herstellung von Coker-Kohle (CH), umfassend die Schritte
- gemeinsame Vorbehandlung einer Mischung einer Biomasse (BM) und eines Schweröls (HC1) mittels einer Flüssigphasenpyrolyse, wobei Brüden sowie ein Bodenprodukt entstehen
- Abtrennen der Brüden vom Bodenprodukt und
- Verkokung des Bodenprodukts,
wobei das Schweröl (HC1) eine kinematische Viskosität bei 100 °C von mehr als 10 mm²/s, bevorzugt von mehr als 15 mm²/s hat.

2. Verfahren gemäß Anspruch 1, **dadurch gekennzeichnet, dass** die bei der Flüssigphasenpyrolyse anfallenden Brüden gesammelt und weiterverarbeitet werden.

3. Verfahren gemäß Anspruch 1 oder 2, **dadurch gekennzeichnet dass** als Schweröl (HC1) ein Rückstandsöl aus Destillations- oder Crackanlagen der Erdölverarbeitung wie:
- Coker-Feed
- Atmosphärischer Rückstand
- Visbraker Rückstand
- Vakuum Rückstand
- FCC Rückstand
- Schweres Gasöl
und Mischungen daraus eingesetzt wird.

4. Verfahren gemäß einem der vorherigen Ansprüche, **dadurch gekennzeichnet, dass** als Biomasse (BM) ein Material ausgewählt aus der Gruppe bestehend aus lignocellulosischem Material wie Holz, Stroh, Pflanzenbestandteilen, biologischen Rückständen wie Agrarrückständen und nichtlignocellulosischen Materialien wie Algen und Mischungen daraus eingesetzt wird.

5. Verfahren gemäß einem der vorherigen Ansprüche, **dadurch gekennzeichnet, dass** im Schritt der Flüssigphasenpyrolyse der Anteil an Biomasse (BM) in der Mischung mit dem Schweröl (HC1) bei 20 Gew.% oder darunter liegt.

6. Verfahren gemäß einem der vorherigen Ansprüche, **dadurch gekennzeichnet, dass** die Flüssigphasenpyrolyse bei Temperaturen im Bereich von 350°C bis 450°C, bevorzugt 400°C bis 450°C und einem Überdruck von 0,5 bar oder weniger durchgeführt wird.

7. Verfahren gemäß Anspruch 6, **dadurch gekennzeichnet, dass** die Flüssigphasenpyrolyse ohne Anwesenheit eines Katalysators durchgeführt wird.

8. Verfahren gemäß einem der vorhergehenden Ansprüche, **dadurch gekennzeichnet, dass** bei der Verkokung anfallende kondensierbare Dämpfe und bei Raumtemperatur nicht kondensierbare Gase gesammelt und weiterverarbeitet werden.

9. Coker-Kohle (CH) **gekennzeichnet durch** einen Anteil an biogenem Kohlenstoff von 5% bis 30% nach ASTM D6866 und einen Anteil an Sauerstoff von weniger als 10%, bevorzugt weniger als 5%.

10. Coker-Crackprodukte **gekennzeichnet durch** einen Anteil an biogenem Kohlenstoff von 2%-10% nach ASTM D6866 und einen Anteil an Sauerstoff von weniger als 5%, bevorzugt weniger als 3%.

## Claims

1. A method for the production of coking coal (CH), comprising the steps of:
― jointly pretreating a mixture of a biomass (BM) and a heavy oil (HC1) using a liquid-phase pyrolysis, whereby vapours and a bottom product are formed,
― separating the vapours from the bottom product, and
― coking the bottom product,
wherein the heavy oil (HC1) has a kinematic viscosity at 100°C of more than 10 mm²/s, preferably of more than 15 mm²/s.

2. A method according to claim 1, **characterized in that** the vapours accumulating during the liquid-phase pyrolysis are collected and processed.

3. A method according to claim 1 or 2, **characterized in that** a residual oil from distillation and cracking plants for oil refining such as:
― a coker feed
― an atmospheric residue
― a visbraker residue
― a vacuum residue
― an FCC residue
― a heavy gas oil
and mixtures thereof is used as the heavy oil (HC1).

4. A method according to any of the preceding claims, **characterized in that** a material selected from the group consisting of lignocellulosic materials such as wood, straw, plant components, biological residues such as agricultural residues and non-lignocellulosic materials such as algae and mixtures thereof is used as the biomass (BM).

5. A method according to any of the preceding claims, **characterized in that**, in the step of the liquid-phase pyrolysis, the proportion of biomass (BM) in the mixture with the heavy oil (HC1) amounts to 20% by weight or below.

6. A method according to any of the preceding claims, **characterized in that** the liquid-phase pyrolysis is performed at temperatures ranging from 350°C to 450°C, preferably from 400°C to 450°C and at an excess pressure of 0.5 bar or less.

7. A method according to claim 6, **characterized in that** the liquid-phase pyrolysis is performed without the presence of a catalyst.

8. A method according to any of the preceding claims, **characterized in that** condensable vapours accumulating during coking and gases not condensable at room temperature are collected and processed.

9. A coking coal (CH) **characterized by** a proportion of biogenic carbon of 5% to 30% according to ASTM D6866 and a proportion of oxygen of less than 10%, preferably less than 5%.

10. Coker cracking products **characterized by** a proportion of biogenic carbon of 2%-10% according to ASTM D6866 and a proportion of oxygen of less than 5%, preferably less than 3%.

## Revendications

1. Procédé de fabrication de charbon à coke (CH), comprenant les étapes suivantes :
- prétraitement commun d'un mélange fait d'une biomasse (BM) et d'une huile lourde (HC1) au moyen d'une pyrolyse en phase liquide, d'où ressortent des vapeurs ainsi qu'un produit de queue,
- séparation des vapeurs du produit de queue et
- cokéfaction du produit de queue,
selon lequel l'huile lourde (HC1) a une viscosité cinématique à 100 °C de plus de 10 mm²/s, de préférence de plus de 15 mm²/s.

2. Procédé selon la revendication 1, **caractérisé en ce que** les vapeurs dégagées lors de la pyrolyse en phase liquide sont collectées et retraitées.

3. Procédé selon la revendication 1 ou 2, **caractérisé en ce qu'**en guise d'huile lourde (HC1) est utilisée une huile résiduelle des installations de distillation ou de craquage du traitement du pétrole telles que les produits suivants :
- charge de cokéfaction
- résidu atmosphérique
- résidu de viscoréduction
- résidu de traitement sous vide
- résidu de FCC
- fioul lourd
et mélanges de ceux-ci.

4. Procédé selon une des revendications précédentes, **caractérisé en ce qu'**en guise de biomasse (BM) est choisie une matière appartenant au groupe constitué de matières lignocellulosiques comme du bois, de la paille, des résidus de plantes, des résidus biologiques comme des déchets agricoles et des matières non lignocellulosiques comme des algues et des mélanges de celles-ci.

5. Procédé selon une des revendications précédentes, **caractérisé en ce que**, dans l'étape de pyrolyse en phase liquide, la proportion de biomasse (BM) dans le mélange avec l'huile lourde (HC1) est de 20% en poids ou moins.

6. Procédé selon une des revendications précédentes, **caractérisé en ce que** la pyrolyse en phase liquide est réalisée à des températures situées sur la plage de 350 °C à 450 °C, de préférence de 400 °C à 450 °C, et avec une surpression de 0,5 bar ou moins.

7. Procédé selon la revendication 6, **caractérisé en ce que** la pyrolyse en phase liquide est réalisée sans la présence d'un catalyseur.

8. Procédé selon une des revendications précédentes, **caractérisé en ce que** les vapeurs condensables dégagées lors de la cokéfaction et les gaz non condensables à température ambiantes sont collectés et retraités.

9. Charbon à coke (CH) **caractérisé par** une teneur en carbone biosourcé de 5% à 30% selon ASTM D6866 et une teneur en oxygène de moins de 10%, de préférence de moins de 5%.

10. Produits de craquage à coke **caractérisés par** une teneur en carbone biosourcé de 2% à 10% selon ASTM D6866 et une teneur en oxygène de moins de 5%, de préférence de moins de 3%.
